# EUROPÄISCHE PATENTANMELDUNG

(11) **EP 1 082 933 A1**
(43) Veröffentlichungstag der Anmeldung: **14.03.2001**
(21) Anmeldenummer: 00810716.1
(22) Anmeldetag: 11.08.2000
(51) Int. Cl.: A47J 36/26

(54) **Warmhaltevorrichtung**

(30) Priorität: 08.09.1999 CH 991632
(71) Anmelder: Feldmann, Susan, 8152 Glattbrugg (CH)
(72) Erfinder: Feldmann, Susan, 8152 Glattbrugg (CH)
(74) Vertreter: Patentanwaltsbüro Feldmann AG

(57) **Zusammenfassung**

Auf einer Grundplatte (2) steht eine Wärmequelle (3). In der Grundplatte (2) schwenkbar gelagert sind in einem Kreis angeordnet mehrere Trägerstreben (4) vorhanden, die je eine Teilfläche (6) tragen. Die Teilflächen (6) definieren zusammen eine Standfläche (5).

An den Trägerstreben (4) sind Mitnehmer angeordnet, die jeweils aus einem exzentrischen Plättchen (9) und einem Mitnehmerdorn (10) bestehen. Eine ringförmige Scheine als Betätigungselement (11) weist radiale Schlitze (12) auf, in die die Mitnehmerdorne eingreifen.

Durch Verdrehen des Betätigungselementes (11) lassen sich alle Trägerstreben (4) mit den Teilflächen (6) schwenken, wodurch die Grösse der Standfläche (5) veränderbar ist.

## Beschreibung

Die vorliegende Erfindung betrifft eine Warmhaltevorrichtung, insbesondere Rechaud, mit den Merkmalen des Oberbegriffes des Patentanspruches 1.

Warmhaltevorrichtungen, auch oft als Rechaud bezeichnet, sind seit vielen Jahren bekannt. Neben ihrem funktionalen Zweck, nämlich Speisen in einer auf der Vorrichtung gestellten Schüssel warmzuhalten, haben die Warmhaltevorrichtungen auch einen dekorativen Wert. Früheste Modelle waren topfartige Gebilde aus Keramik oder Porzellan, in denen eine Kerze untergebracht werden kann. Erst sehr viel später ist man von diesem Grundprinzip abgegangen und hat Versionen aus Metall konzipiert, die praktisch nur noch aus einer Grundplatte bestehen, auf welche eine Wärmequelle stellbar ist und wobei Trägerstreben an der Grundplatte angeordnet sind, welche eine von der Grundplatte distanzierte Standfläche tragen. Wärmequellen können die bekannten Rechaud-Kerzen sein, aber auch Gas-, Brennstoffpasten- oder Spiritusbrenner kommen als Wärmequellen in Frage. Solche Warmhaltevorrichtungen werden sehr häufig auch zum Warmhalten von Käsefondues, Fleischfondues oder anderen am Tisch zuzubereitenden Speisen verwendet. Warmhaltevorrichtungen für den letztgenannten Zweck werden dann üblicherweise eher mit Gas- oder Spiritusbrenner kombiniert, als mit Kerzen.

Sowohl die Schüsseln, in denen Speisen warmgehalten werden sollen, als auch die pfannenartigen Behältnisse für Fondues haben völlig verschieden grosse Standflächen. Während somit die Standflächen der auf die Warmhaltevorrichtung aufzustellenden Behältnisse variieren, haben die heute bekannten Warmhaltevorrichtungen eine in der Grösse und Gestalt nicht veränderbare Standfläche.

Es ist daher die Aufgabe der vorliegenden Erfindung, eine Warmhaltevorrichtung, insbesondere Rechaud, zu schaffen, umfassend eine Grundplatte, auf die eine Wärmequelle stellbar ist, und auf die Trägerstreben angebracht sind, welche eine Standfläche halten, die so gestaltet ist, dass sie den unterschiedlichen Bodenflächen der darauf stellbaren Behältnisse anpassbar ist.

Diese Aufgabe löst eine Warmhaltevorrichtung mit den Merkmalen des Patentanspruches 1.

Die einfachste und preiswerteste Form der schwenkbeweglichen Lagerung der Trägerstreben wird dadurch realisiert, dass man in die Grundplatte in einem Kreis angeordnete Lagerbohrungen zur Lagerung der drehbeweglichen Trägerstreben vorsieht. Die Anordnung in einem Kreis hat zudem verschiedene Vorteile. Einerseits wird durch eine solche Anordnung eine besonders vorteilhafte Krafteinleitung der darauf zu stellenden Behältnisse erreicht und andererseits die Möglichkeit geschaffen, die Wärmequelle zentrisch anzuordnen. Letztlich aber dient diese Anordnung insbesondere auch dazu, eine gemeinsame Betätigung aller Trägerstreben miteinander zu ermöglichen, wie dies noch nachträglich zu erläutern ist.

Damit man zur Veränderung der Standfläche nicht direkt an die Teilflächen angreifen muss ist es von Vorteil, an den Trägerstreben Mitnehmer anzuordnen, die zur Ausübung der Schwenkbewegung der Trägerstreben dienen.

Insbesondere ist es von Vorteil, ein Betätigungselement vorzusehen, mittels dem die schwenkbaren Trägerstreben um ihre eigene Achse verschwenkt werden können.

Es ist von Vorteil, die Mitnehmer mit je einem von der schwenkbaren Trägerstrebe, an der sie befestigt sind, distanziert angeordneten Mitnehmerdorn zu versehen. Ein solcher Mitnehmerdorn ermöglicht die formschlüssige Verbindung mit einem Betätigungselement zur Durchführung der Schwenkbewegung der Trägerstreben. Diese formschlüssige Verbindung zwischen Mitnehmerdorn und Betätigungselement lässt sich besonders einfach realisieren, indem man das Betätigungselement 11 als eine ringförmige Scheibe gestaltet, die mit radialen Führungsschlitzen versehen ist, in die die Mitnehmerdorne eingreifen. Durch die exzentrische Anordnung der Mitnehmerdorne bezüglich den Trägerstreben führt folglich eine Drehbewegung der ringförmigen Scheibe zu einer gemeinsamen Schwenkbewegung aller schwenkbaren Trägerstreben. Dies verlangt selbstverständlich, dass die Trägerstreben in einem Kreis angeordnet sind. Das Betätigungselement könnte auch eine kreisförmige Scheibe sein, die innerhalb der auf einem Kreis angeordneten Trägerstreben liegt. Auch in diesem Falle hätte selbstverständlich die kreisförmige Scheibe entsprechende Führungsschlitze. Die Wärmequelle 3 steht dann zwar nicht mehr direkt auf der Grundplatte sondern mittelbar, indem sie auf der kreisförmigen Scheibe steht, welche auf der Grundplatte aufliegt.

Einfacher und in der Betätigung günstiger ist es jedoch, das Betätigungselement, wie bereits erwähnt, als ringförmige Scheibe mit radialen Führungsschlitzen zu gestalten. Bei dieser bevorzugten Gestaltung ist es dann sinnvoll, alle Trägerstreben innerhalb der zentrischen Oeffnung der ringförmigen Scheibe anzuordnen.

Die Mitnehmer, die an den schwenkbeweglichen Trägerstreben fest angeordnet sind, können vorteilhafterweise so gestaltet sein, dass an den Trägerstreben zur Grundplatte parallele Plättchen angeordnet sind, auf die die erwähnte ringförmige Scheibe als Betätigungselement aufliegt, während die erwähnten Mitnehmerdorne, welche auf dem Plättchen angebracht sind, in die Führungsschlitze eingreifen.

Aus Kosten- und Platzgründen ist es besonders vorteilhaft, die Teilflächen der Standfläche aus Draht zu formen. Üblicherweise werden auch die Trägerstreben aus Draht gebildet sein. Entsprechend lassen sich die Trägerstreben und die Teilflächen aus gleichem Draht fertigen und löt- oder schweisstechnisch miteinander verbinden. Eine besonders preiswerte Lösung kann auch darin bestehen, die Teilfläche und die Trägerstrebe einstückig aus einem Draht zu fertigen. Es ist jedoch durchaus auch möglich, die Teilflächen der Standfläche als aus Metallblech gestanzte Zierplättchen zu gestalten. Die Verwendung von Zierplättchen aus Metallblech erlaubt es, dass die Zierplättchen in jener Lage, bei der die kleinste Standfläche gebildet wird, einander teilweise überlappen, während in der Lage, in der die grösste Standfläche gebildet wird, eine solche Ueberlappung weniger gross oder nicht mehr vorhanden ist.

In der beiliegenden Zeichnung ist eine einzige, bevorzugte Ausführungsform des Erfindungsgegenstandes dargestellt und anhand der nachfolgenden Beschreibung erläutert. Es zeigt:
- Figur 1: die erfindungsgemässe Warmhaltevorrichtung in einer Lage mit kleinstmöglicher Standfläche und
- Figur 2: dieselbe Vorrichtung in einer Lage mit grösstmöglicher Standfläche. In der
- Figur 3: ist die schwenkbewegliche Strebe mit den daran fest angeordneten Teilen für sich allein in der Seitenansicht dargestellt, während
- Figur 4: die Grundplatte der Warmhaltevorrichtung für sich allein in der Aufsicht zeigt und
- Figur 5: ein mit den beiden zuvor dargestellten Elementen kombinierbares Betätigungselement ebenfalls in der Aufsicht zeigt.

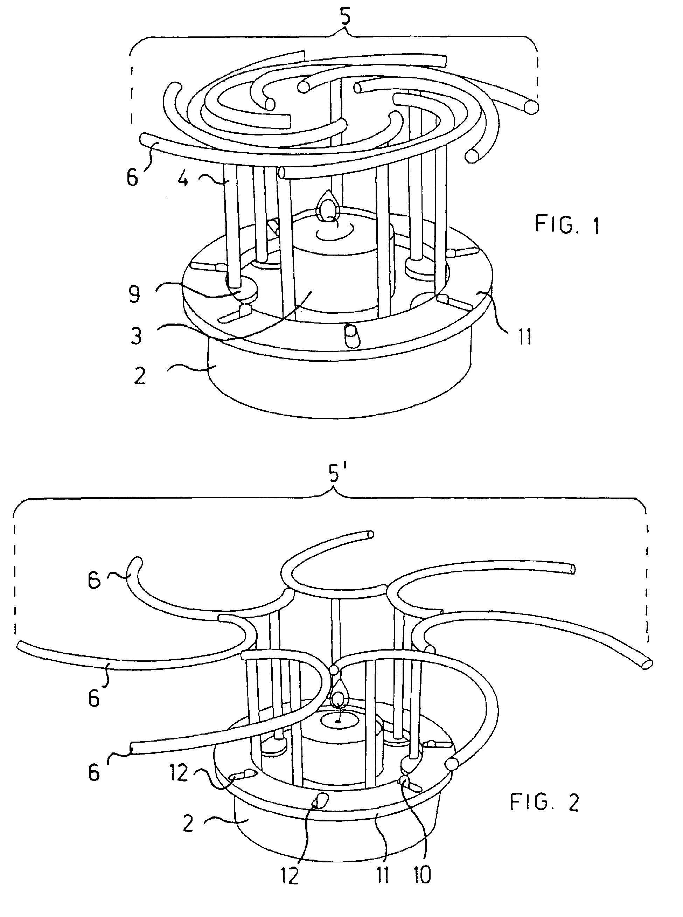

In den Figuren 1 und 2 ist dasselbe Rechaud, beziehungsweise Warmhaltevorrichtung in den beiden Extrempositionen bezüglich der Grösse der Standfläche dargestellt. Wenn hier und in der Folge von Standfläche gesprochen wird, so wird hierunter jene Fläche verstanden, welche die Teilflächen bilden, wenn man um sie eine konvexe Umschliessungskurve denkt.

Die gesamte Warmhaltevorrichtung ist mit der Bezugszahl 1 bezeichnet. Die Warmhaltevorrichtung hat eine Grundplatte 2, welche die Auflagefläche der Warmhaltevorrichtung auf einem Tisch bildet. Bei der hier dargestellten Ausführung hat die Grundplatte 2 eine erhebliche Dicke, von beispielsweise 1-2 cm. Eine derartige Grundplatte hat den Vorteil, eine grosse Standfestigkeit zu erzeugen und es ist möglich, in derselben Grundplatte 2 entsprechende Bohrungen anzubringen, die als Lager für die mit 4 bezeichneten Trägerstreben dienen. Die Grundplatte 2 bildet gleichzeitig die Standfläche für die Wärmequelle 3.

Im hier dargestellten Beispiel ist die Wärmequelle 3 als Rechaudkerze dargestellt. Die ebenfalls gebräuchlichen Gasbeziehungsweise Spiritusbrenner lassen sich mit dem erfindungsgemässen Rechaud problemlos ebenfalls verwenden. Zwischen den erwähnten Trägerstreben 4 verbleibt genügend Raum, dass ein Betätigungshebel des Brenners dazwischen hindurchgeführt werden kann. Weil die Trägerstreben 4 keine translatorische Bewegung durchführen, ergibt dies keinerlei Probleme. Die Trägerstreben 4, die allesamt als vertikal nach oben gerichtete Drahtstäbe gestaltet sind, sind an ihren oberen Enden mit gekrümmt gestalteten Drahtabschnitten verbunden, welche Teilflächen 6 definieren. Die Teilflächen 6 bilden zusammen die Standfläche 5. Die kleinstmögliche Standfläche ist in der Figur 1 dargestellt, während die grösstmögliche Standfläche in der Figur 2 dargestellt ist und hier als 5' bezeichnet ist. Die Gestaltungsform der Teilflächen 6 kann praktisch beliebig sein, allerdings müssen sie so geformt sein, dass die erforderliche Schwenkbewegung stattfinden kann, ohne dass sich die Teilflächen gegenseitig ins Gehege kommen. Weniger problematisch ist dies dann, wenn diese Teilflächen 6 nicht wie hier dargestellt als Drahtstäbe gefertigt sind, sondern als flache Plättchen. Solche aus Metallblech gestanzten Plättchen können entsprechend auch als Zierplättchen gestaltet sein. Durch eine geringfügige Neigung ist es auch möglich dass solche Zierplättchen aus Metallblech übereinanderlappend angeordnet sein können in der Lage, bei der sie die kleinste Standfläche 5 bilden. In der nach aussen geschwenkten Position, in der sie die grösste Standfläche 5' definieren, würden sich dann diese Zierplättchen nicht mehr gegenseitig überlappen oder nur noch geringfügig.

Als gestalterisch ebenfalls markantes Element erkennt man ferner das Betätigungselement 11. Es handelt sich hierbei in der hier dargestellten Version um eine ringförmige Scheibe. Diese ringförmige Scheibe 11 weist radial nach aussen gerichtete Führungsschlitze 12 auf. Die zentrische Oeffnung 13 des Betätigungselementes 11 ist ebenfalls kreisförmig gestaltet und im Durchmesser so, dass sämtliche auf der Grundplatte 2 angeordneten Lagerbohrungen 7 im zusammengesetzten Zustand des Rechauds innerhalb dieser erwähnten zentrischen Oeffnung zu liegen kommen. Da in den Lagerbohrungen 7, wie bereits beschrieben, die Trägerstreben 4 schwenkbeweglich gelagert sind, umgreift somit das Betätigungselement 11 beziehungsweise die ringförmige Scheibe die Trägerstreben 4.

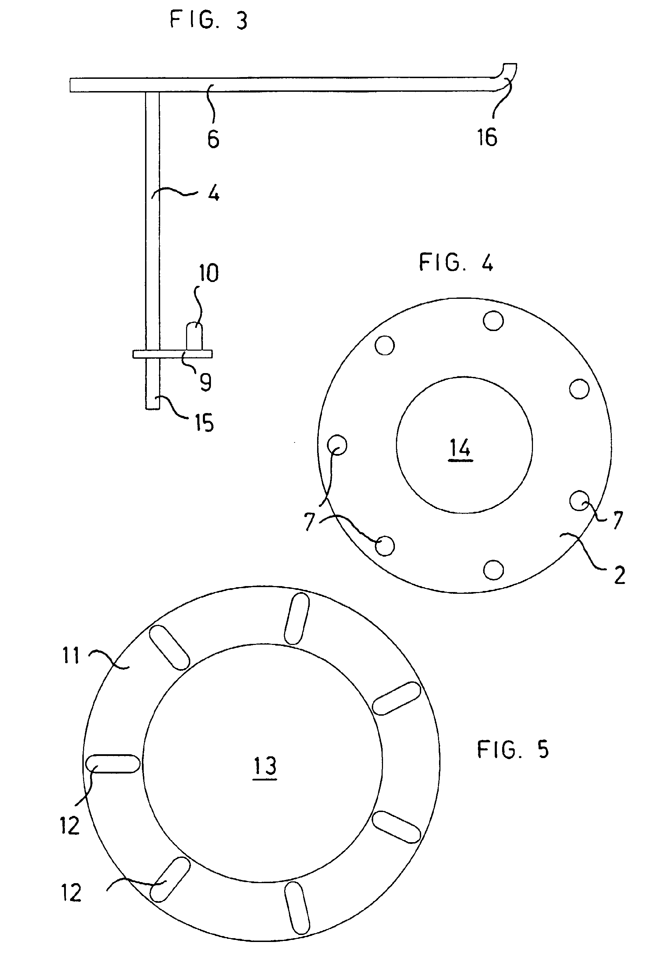

An den Trägerstreben 4 sind senkrecht zu deren Verlaufsrichtung Plättchen 9 angeformt. Diese kreisförmigen, exzentrisch an den Trägerstreben 4, vorzugsweise angeschweissten Plättchen 9 tragen zusätzlich Mitnehmerdorne 10. In der hier dargestellten Ausführungsform sind die Mitnehmerdorne 10 parallel zu den Trägerstreben 4 verlaufend und nach oben zur Teilfläche 6 hin gerichtet. Am deutlichsten ist dies in der Figur 3 erkennbar. Das Plättchen 9 und der Mitnehmerdorn 10 bilden so gemeinsam den Mitnehmer 8. Im zusammengebauten Zustand kommt das unterste Ende 15 der Trägerstrebe 4 in die Lagerbohrung 7 der Grundplatte 2 zu liegen. Vorteilhafterweise gestaltet man die Lagerbohrungen 7 als Sacklochbohrung, so dass das untere Ende 15 der Trägerstrebe 4 in die Sacklochbohrung der Lagerbohrung 7 aufsteht. Nun liegt das erwähnte Plättchen 9 des Mitnehmers 8 nicht auf der Grundplatte 2 auf, sondern bewegt sich leicht oberhalb der Grundplatte. Das Betätigungselement 11 in der Form einer ringförmigen Scheibe liegt nun auf den erwähnten Plättchen 9 der Mitnehmer 8 auf. Gleichzeitig durchsetzen die Mitnehmerdorne 10 die ringförmige Scheibe 11. Hierzu dienen die entsprechenden radialen Schlitze 12. Diese radialen Führungsschlitze 12 erlauben eine Relativbewegung der Mitnehmerdorne 10 in den erwähnten Führungsschlitzen 12. Bei einer Drehbewegung des Betätigungselementes 11 um den maximal möglichen Winkel, um die variable Standfläche 5 von der minimalen definierenden Grösse zur maximalen Grösse zu verändern, wandern die Mitnehmerdorne 10 von der innersten Lage, wie in Figur 1 gezeichnet, in den radialen Führungsschlitzen zuerst nach aussen und danach wiederum nach innen. Selbstverständlich ist das Rechaud in jeder Zwischenposition genauso verwendbar wie in den beiden Endpositionen.

Die vergrösserte Standfläche 5 bzw. 5' führt dazu, dass einerseits der spezifische Druck des darauf stehenden Behältnisses reduziert wird und andererseits, dass das Behältnis auf der Standfläche verschiebbar ist. Es ist daher sinnvoll, an den Teilflächen 6 entsprechende Antirutschmittel vorzusehen. Besonders einfach ist es möglich diese Antirutschmittel zu realisieren, indem die peripheren Enden der Teilflächen 6 von der Standfläche einen jeweils nach oben vorstehenden Bereich 16 aufweisen. Dieser kann durch Verdickungen oder Aufwölbungen geformt sein.

Obwohl in der Zeichnung nur die bevorzugte Ausführung dargestellt ist, wird auch eine Variante beansprucht, die eine drehbewegliche Anordnung der Teilflächen 6 an den Trägerstreben 4 vorsieht. Eine solche Lösung erübrigt den Betätigungsring, ist jedoch weniger stabil.

Ohne den Erfindungsgedanken zu verlassen, sind viele insbesondere gestalterische Möglichkeiten vorhanden. Neben den verschiedenen ästhetischen Gestaltungsformen der Teilflächen, wie bereits erwähnt, lassen sich selbstverständlich sowohl die Grundplatte wie auch das Betätigungselement in der Form variieren. Auch in Bezug auf die Materialwahl bestehen praktisch keine Grenzen. Fast alle Metallkombinationen kommen in Frage.

## Patentansprüche

1. Warmhaltevorrichtung (1) insbesondere Rechaud, umfassend eine Grundplatte (2), auf welche eine Wärmequelle (3) stellbar ist und auf der Trägerstreben (4) angebracht sind, welche eine Standfläche (5) halten, dadurch gekennzeichnet, dass die Standfläche (5) aus Teilflächen (6) besteht, die mit oder bezüglich den Trägerstreben (4) schwenkbeweglich sind, so dass die Teilflächen (6) eine in der Grösse variable Standfläche (5) definieren.

2. Warmhaltevorrichtung nach Anspruch 1, dadurch gekennzeichnet, dass die Grundplatte (2) in einem Kreis angeordnete Lagerbohrungen (7) aufweist, in denen die Trägerstreben (4) drehbar gelagert sind.

3. Warmhaltevorrichtung nach Anspruch 1, dadurch gekennzeichnet, dass an den Trägerstreben (4) Mitnehmer (8) angeordnet sind, die zur Ausübung der Schwenkbewegung der Trägerstreben (4) dienen.

4. Warmhaltevorrichtung nach Anspruch 1, dadurch gekennzeichnet, dass ein Betätigungselement (11) vorhanden ist, mittels dem die schwenkbaren Trägerstreben (4) um ihre eigene Achse verschwenkbar sind.

5. Warmhaltevorrichtung nach Anspruch 3, dadurch gekennzeichnet, dass die Mitnehmer (8) je einen von den schwenkbaren Trägerstreben (4) distanziert angeordneten Mitnehmerdorn (10) aufweisen.

6. Warmhaltevorrichtung nach Anspruch 4, dadurch gekennzeichnet, dass das Betätigungselement (11) eine ringförmige Scheibe mit radialen Führungsschlitzen (12) ist, in die die Mitnehmerdorne (10) eingreifen.

7. Warmhaltevorrichtung nach Anspruch 2 und 6, dadurch gekennzeichnet, dass die schwenkbeweglichen Trägerstreben (4) innerhalb der zentrischen Oeffnung (13) der ringförmigen Scheibe (11) angeordnet sind.

8. Warmhaltevorrichtung nach Anspruch 6, dadurch gekennzeichnet, dass die Mitnehmer (8) an die schwenkbeweglichen Trägerstreben (4) fest angeordnete zur Grundplatte (2) parallele Plättchen (9) sind, auf die die ringförmige Scheibe (11) aufliegt, während die Mitnehmerdorne (10) in die Führungsschlitze (12) eingreifen.

9. Warmhaltevorrichtung nach Anspruch 1, dadurch gekennzeichnet, dass die Grundplatte (2) eine zentrische Vertiefung (14) zur Aufnahme einer Kerze, eines Brenners oder einer anderen Wärmequelle (3) aufweist.

10. Warmhaltevorrichtung nach Anspruch 1, dadurch gekennzeichnet, dass die Teilflächen (6) der Standfläche (5) aus einem Draht geformt sind.

11. Warmhaltevorrichtung nach Anspruch 1, dadurch gekennzeichnet, dass die Teilflächen (6) der Standfläche (5) mit den Trägerstreben (4) einstückig aus Draht geformt sind.

12. Warmhaltevorrichtung nach Anspruch 1, dadurch gekennzeichnet, dass die Teilflächen (6) der Standfläche (5) aus Metallblech gestanzte Zierplättchen sind.

13. Warmhaltevorrichtung nach Anspruch 1, dadurch gekennzeichnet, dass die peripheren Enden der Teilflächen (6) einen von der Standfläche (6) nach oben aufragenden Bereich (16) aufweisen zur Erzielung einer Rutschsicherung.
